# EUROPEAN PATENT SPECIFICATION

(11) **EP 2 522 540 B1**
(45) Date of publication and mention of the grant of the patent: **24.07.2013**
(21) Application number: 12160596.8
(22) Date of filing: 21.03.2012
(51) Int. Cl.: B60K 13/04, C10L 10/06

(54) **Structure for arranging additive tank for vehicle**
Struktur zur Anordnung eines Zusatztanks für ein Fahrzeug
Structure d'installation d'un réservoir d'additif pour véhicule

(30) Priority: 12.05.2011 JP 2011106794
(43) Date of publication of application: 14.11.2012
(73) Proprietor: Mitsubishi Jidosha Kogyo Kabushiki Kaisha, Tokyo 108-8410 (JP)
(72) Inventor: Kida, Naoki, Tokyo, 108-8410 (JP); Fujiwara, Shoji, Tokyo, 108-8410 (JP)
(74) Representative: Vossius & Partner

(56) References cited:
- EP-A1- 2 048 016
- WO-A2-01/46568

## Description

The present invention relates to a structure for arranging an additive tank (a tank for containing an additive) for a vehicle.

An exhaust pipe for exhausting an exhaust gas from a diesel engine or the like is provided with a diesel particulate filter (hereinafter referred to as a filter) for trapping particulate matter such as soot in the exhaust gas. The particulate matter which has been trapped by the filter is burnt utilizing heat of the exhaust gas, and removed.

A combustion temperature of the particulate matter in the above described filter is as high as 550°C. However, a temperature of the exhaust gas (an exhaust temperature) is lower than 550°C immediately after an operation of a vehicle has started or during low speed operation. Therefore, an oxidizing catalyst which undergoes oxidation reaction with unburned fuel and is heated by this reaction is provided on the filter or in an upstream of the filter in an exhaust gas flowing direction. In case where the exhaust gas has a low temperature, the unburned fuel (HC) is supplied to the exhaust gas, by conducting post injection (exhaust step injection) thereby to generate oxidation reaction with the oxidizing catalyst, and thus, the temperature of the exhaust gas is raised. However, the post injection is a factor for deteriorating cost performance of the fuel, because the fuel is not used for operating the vehicle, but wasted for dealing with the particulate matter in the filter.

On the other hand, an art of adding an additive (catalyst) such as cerium oxide (CeO) to the fuel, thereby to lower the combustion temperature of the particulate matter in the filter to 450°C, has been developed. By employing such art, it is possible to reduce an injection amount of the fuel during the post injection, or to decrease the number of times of the post injection, and accordingly, deterioration of the cost performance of the fuel can be effectively depressed (for example, refer to JP-A-H06-193427 (paragraph 0014 in the specification)).

The above described additive is contained in an additive tank. The additive tank is arranged, for example, at a lower face side of a floor panel.

In case where the additive tank containing an inflammable solvent is arranged at the lower face side of the floor panel, it is necessary to protect the additive tank from splashing stones during the operation or damage in the event of collision. Therefore, some countermeasures such as a layout capable of protecting the additive tank, or mounting of a protector are required. Although the additive tank can be protected by these countermeasures, it has been sought for to further improve the protection of the additive tank.

Document WO 0146568 describes a structure according to the preamble of claim 1.

It is therefore an object of the invention to provide a structure for arranging an additive tank for a vehicle which can realize further improvement of protection of the additive tank from splashing stones during operation of the vehicle or damage in the event of collision.

The obj ect above can be achieved by the features specified in the claims. Particularly, in order to achieve the object, according to the invention, there is provided a structure for arranging an additive tank for a vehicle, the vehicle comprising: a particulate filter for trapping particulate matter in an exhaust gas which is exhausted from a diesel engine; and an additive tank for containing an additive which lowers a combustion temperature of the particulate matter which is trapped by the particulate filter, the structure **characterized in that** the additive tank is arranged between a floor panel which is fixed to right and left side members, and a cross member which is provided so as to bridge the right and left side members.

The cross member may have a grid-like shape including a front traverse part extending in a lateral direction of the vehicle, a rear traverse part extending in the lateral direction and arranged at a rearward side of the vehicle than the front traverse part and at a lower side than the front traverse part, and right and left connecting parts extending in a longitudinal direction of the vehicle and connected to the front traverse part and the rear traverse part.

The additive tank may be arranged at a substantially center in the lateral direction of the vehicle.

The additive tank may be fixed to a lower face of the floor panel, and be arranged above the cross member with respect to a road surface.

The additive tank may be arranged below the floor panel and above the cross member.

According to the structure for arranging an additive tank for a vehicle in the invention, the additive tank is arranged above the cross member with respect to the road surface, and hence, further improvement of the protection of the additive tank from splashing stones during operation of the vehicle or damage in the event of collision can be realized.

The invention is described in detail in conjunction with the drawings, in which:
Fig. 1 is a bottom view of a structure for arranging an additive tank for a vehicle in an embodiment according to the invention,
Fig. 2 is a rear view of the structure for arranging an additive tank for a vehicle in the embodiment according to the invention,
Fig. 3 is a sectional view of the structure for arranging an additive tank for a vehicle in the embodiment according to the invention,
Fig. 4 is a view for explaining the additive tank in the structure for arranging an additive tank for a vehicle in the embodiment according to the invention,
Fig. 5A is a view for explaining the additive tank in the structure for arranging an additive tank for a vehicle in the embodiment according to the invention, in a state where a floor panel is provided,
Fig. 5B is a view for explaining the additive tank in the structure for arranging an additive tank for a vehicle in the embodiment according to the invention, in a state where the floor panel is removed, and
Fig. 6 is a chart showing results of simulation of collision of the structure for arranging an additive tank for a vehicle in the embodiment according to the invention.

Now, mode for carrying out a structure for arranging an additive tank (a tank for containing an additive) for a vehicle according to the invention will be described by way of an embodiment.

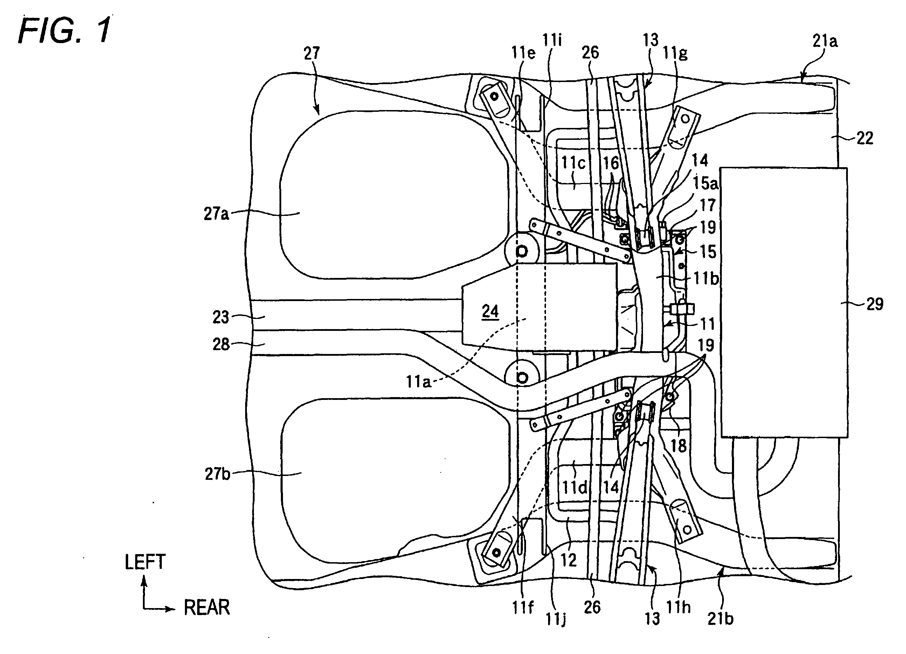

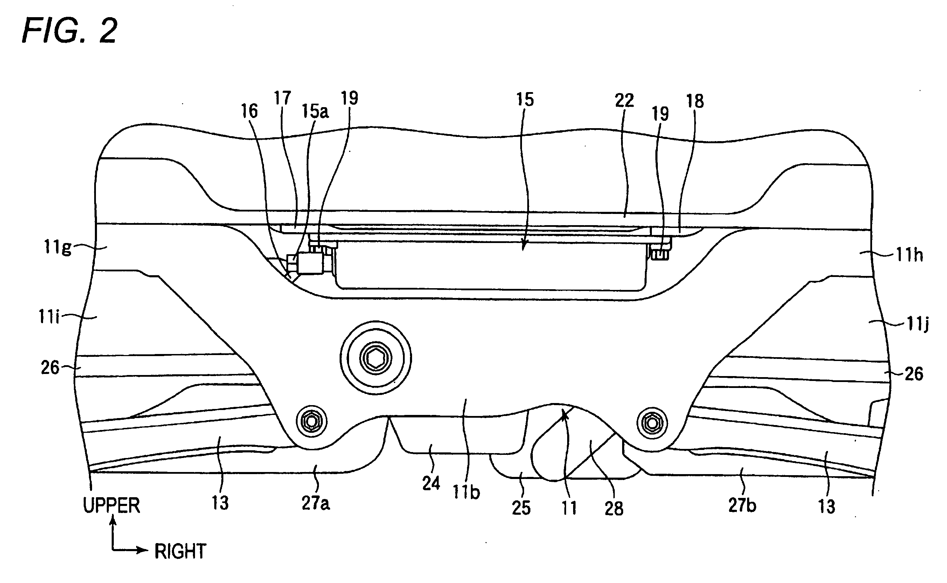

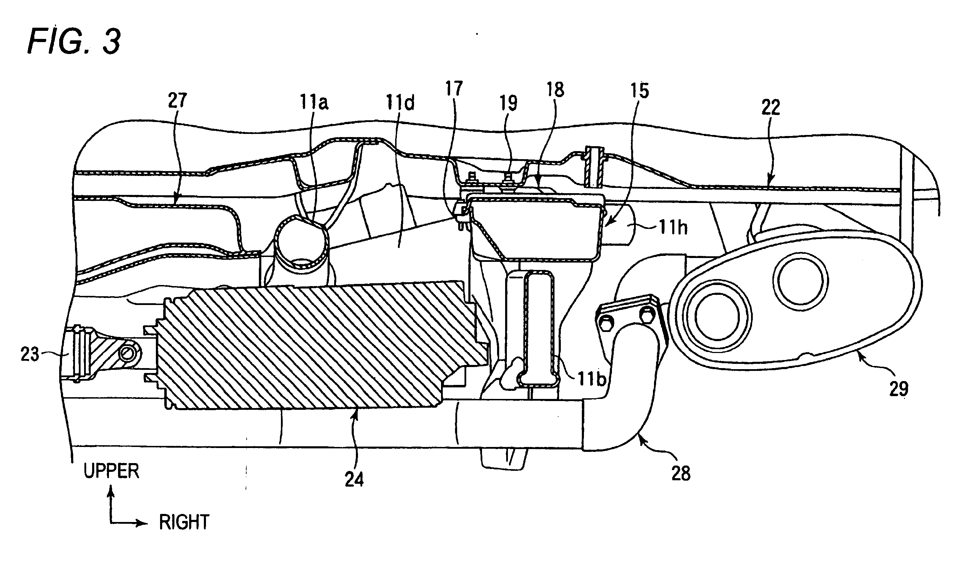

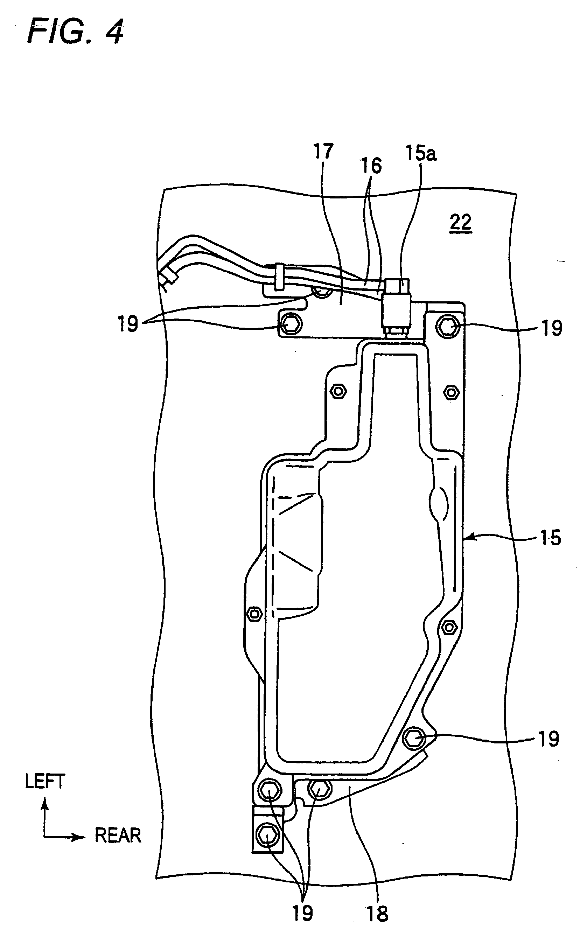

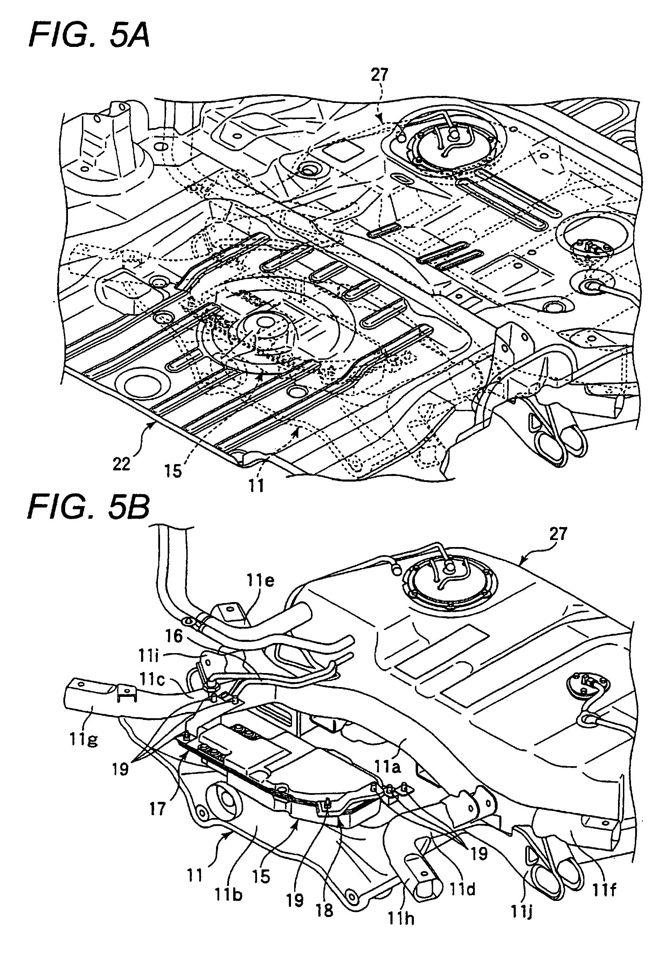

The structure for arranging an additive tank for a vehicle in the embodiment according to the invention will be specifically described, referring to Figs. 1 to 6.

As shown in Figs. 1 to 5, right and left side members 21a, 21b extending in a longitudinal direction of the vehicle to form a skeleton of a vehicle body are provided at both sides in a lateral direction of the vehicle. A floor panel (a rear floor panel) 22 is fixed to the right and left side members 21a, 21b. A driving device (not shown) including a diesel engine and a transmission, and a propeller shaft 23 extending rearward from the driving device are arranged in a substantially center part in the lateral direction of a front part of the vehicle, below the floor panel 22. The propeller shaft 23 is connected to a rear differential 24, and drives rear wheels (not shown) via the rear differential 24 and rear drive shafts 26. Near the rear differential 24, a fuel tank 27 for containing fuel for the diesel engine is disposed. The fuel tank 27 is provided with swelled parts 27a, 27b which are swelled downward of the vehicle body at positions adjacent to the propeller shaft 23.

An exhaust pipe 28 which is connected to an exhaust manifold (not shown) of the diesel engine is provided adjacent to the propeller shaft 23 in the substantially center part in the lateral direction, below the floor panel 22. The exhaust pipe 28 extends to a rearward side of the vehicle, and a rear end thereof is connected to a main muffler 29. A particulate filter for trapping particulate matter in an exhaust gas, and an exhaust gas purifying device 25 provided with an oxidizing catalyst which undergoes oxidation reaction with unburned fuel are arranged in an upstream of the main muffler 29 in an exhaust gas flowing direction, in the exhaust pipe 28.

A rear suspension cross member 11 is arranged near the above described differential 24. The rear suspension cross member 11 has a grid-like shape, and includes a front traverse part 11a, a rear traverse part 11b, a left connecting part 11c, and a right connecting part 11d. The front traverse part 11a and the rear traverse part 11b are the parts extending in the lateral direction, and arranged substantially in parallel with each other. The rear traverse part 11b is arranged at the rearward side of the vehicle than the front traverse part 11a, and positioned at a lower side than the front traverse part 11a. The front traverse part 11a and the rear traverse part 11b are connected by means of the left connecting part 11c and the right connecting part 11d. The front traverse part 11a is provided with a left frontward extending part 11e and a right frontward extending part 11f which are respectively fixed to the side members 21a, 21b. The rear traverse part 11b is provided with a left rearward extending part 11g and a right rearward extending part 11h which are respectively fixed to the side members 21a, 21b. In short, the rear suspension cross member 11 is provided so as to bridge the side members 21a, 21b. The front traverse part 11a is provided with mounting parts 11i, 11j.

Trailing arms (not shown) extending in a longitudinal direction of the vehicle are mounted by means of the mounting parts 11i, 11j of the rear suspension cross member 11. Bushes (not shown) whose axes are directed in the lateral direction are provided on the trailing arms at a front side of the vehicle, and the trailing arms are respectively mounted on the side members 21a, 21b via the bushes. Lower arms 13 are attached to the rear traverse part 11b of the rear suspension cross member 11. The lower arms 13 are pivotally held by the trailing arms so as to swing in a vertical direction. The rear wheels are rotatably held by rear end parts of the trailing arms via axles and hubs which are not shown.

Moreover, a stabilizer rod 12 is provided so as to bridge right and left parts of the rear suspension cross member 11.

An additive tank 15 for containing an additive is disposed between the floor panel 22 and the rear suspension cross member 11. Specifically, a space is formed below the floor panel 22 and above the rear traverse part 11b of the rear suspension cross member 11, and the additive tank 15 is disposed in this space. The additive tank 15 is slightly larger than the rear traverse part 11b of the rear suspension cross member 11 in the longitudinal direction, and has a shape extending in the lateral direction. The additive tank 15 is fixed to a lower face (a body) of the floor panel 22 by means of bolts 19 via brackets 17, 18 which are provided in the lateral direction. Therefore, a major part of the additive tank 15 is covered with the rear traverse part 11b of the rear suspension cross member 11 with respect to a road surface. In short, the additive tank 15 is positioned so as to be less exposed to the road surface. The additive tank 15 is provided with an exhaust part 15a. An additive feeding pipe 16 is connected to the exhaust part 15a of the additive tank 15. The other end of the additive feeding pipe 16 is connected to the fuel tank 27. In this manner, the additive in the additive tank can be fed to the fuel tank 27.

The additive is a catalyst for lowering a combustion temperature of the particulate matter which is trapped by the particulate filter from 550°C to 450°C, by supplying the additive to the fuel in the fuel tank 27. Such catalyst that a main component of solvent is cerium oxide and the solvent is isoparaffin, for example, which should be treated as an inflammable substance, is exemplified as the additive.

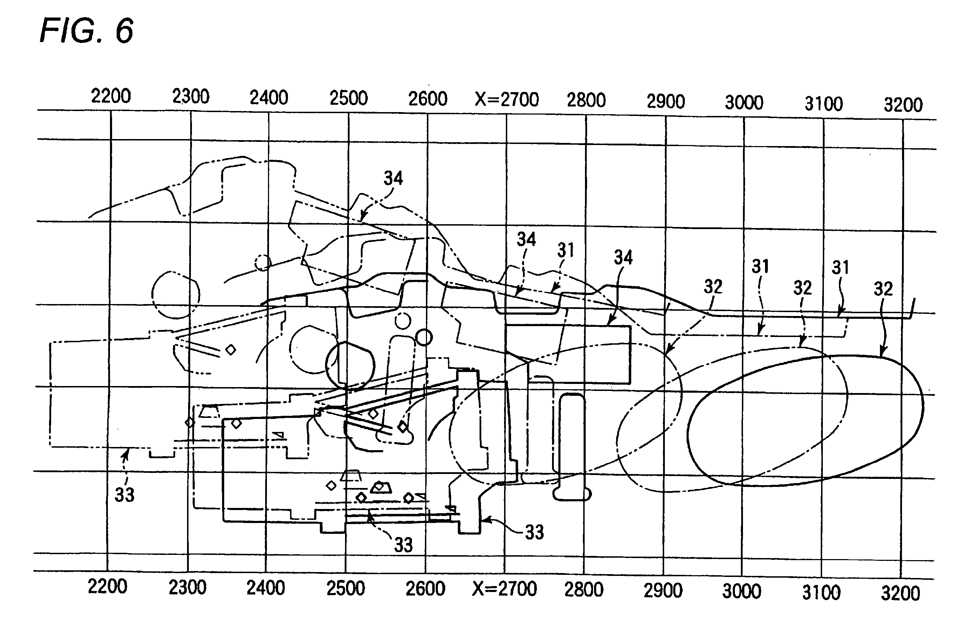

Now, results of analysis of simulation, when a shock is given to an entire rear part of the vehicle from a rear side thereof, that is, the results of the analysis of the simulation in the event of full lap collision will be described, referring to Fig. 6. In Fig. 6, a solid line represents initial positions of the floor panel, the main muffler, the rear differential, and the additive tank, a one-dot chain line represents positions of the floor panel, the main muffler, the rear differential, and the additive tank at a 20ms time which is a time after the lapse of 20 millisecond from the time of collision, and a two-dot chain line represents positions of the floor panel, the main muffler, the rear differential, and the additive tank at a 50ms time which is a time after the lapse of 50 millisecond from the time of collision. X represents distances from a front end of the vehicle.

As shown in Fig. 6, an additive tank 34 as well as a floor panel 31, a main muffler 32 and a rear differential 33, moves from the initial position, at the 20ms time. Because the additive tank 34 follows the body, it is found that the additive tank 34 is positioned remote from the main muffler 32, passing by the rear differential 33. Also at the 50ms time, the additive tank 34 as well as the floor panel 31, the main muffler 32 and the rear differential 33, moves from the initial position, and the additive tank 34 follows the body in the same manner as at the 20ms time, and therefore, it is found that the additive tank 34 is positioned remote from the main muffler 32, passing by the rear differential 33. In conclusion, it is confirmed that it is advantageous, in realizing further improvement of the protection of the additive tank 15, to arrange the additive tank 15 in a state fixed to the lower face of the floor panel 22, in the space which is formed above the rear traverse part 11b of the rear suspension cross member 11.

Therefore, according to the structure for arranging an additive tank for a vehicle in the embodiment, the additive tank 15 is positioned above the rear suspension cross member 11 with respect to the road surface, because the additive tank 15 is arranged between the floor panel 22 and the rear suspension cross member 11. Accordingly, those regions of the additive tank 15 which are exposed to the road surface are decreased. As the results, it is possible to prevent splashing stones or the like during operation of the vehicle from being directly contacted with the additive tank. Moreover, because the additive tank 15 is arranged above the rear suspension cross member 11 which is fixed to the side members 21a, 21b, it is possible to prevent a shock in the event of collision from being directly inputted to the additive tank 15. In short, as compared with a case where the additive tank is simply disposed below the floor panel, further improvement of the protection of the additive tank 15 can be realized. Further, when a shock is given to the entire rear part of the vehicle from the rear side thereof, although the additive tank 15 moves, the additive tank 15 will not get in touch with the rear differential 24 and the muffler 29 in its surroundings, and hence, further improvement of the protection of the additive tank can be realized.

The rear suspension cross member 11 has a grid-like shape, including the front traverse part 11a, the rear traverse part 11b, the left connecting part 11c, and the right connecting part 11d. Because the rear traverse part 11b is positioned at the lower side than the front traverse part 11a, the space can be secured between the rear traverse part 11b and the floor panel 22, and the additive tank 15 can be disposed in this space. As the results, it is possible to realize further improvement of the protection of the additive tank from splashing stones or the like during the operation or damage in the event of collision.

The additive tank 15 is arranged at the substantially center in the lateral direction, and therefore, positioned at the substantially center of the rear traverse part 11b of the rear suspension cross member 11. Accordingly, the additive tank 15 can be positioned in the space between the rear traverse part 11b and the floor panel 22. As the results, the additive tank 15 is arranged above the rear suspension cross member 11 with respect to the road surface. Therefore, it is possible to realize further improvement of the protection of the additive tank from splashing stones or the like during the operation or damage in the event of collision.

The additive tank 15 is fixed to the lower face (body) of the floor panel 22, and positioned above the rear suspension cross member 11 with respect to the road surface. Therefore, when a shock is applied to the entire rear part of the vehicle from the rear side thereof, the additive tank 34 follows the body and moves so as to be positioned remote from the main muffler 32, passing by the rear differential 33. As the results, it is possible to realize further improvement of the protection of the additive tank.

The structure for arranging an additive tank for a vehicle according to the invention can be extremely advantageously utilized in motor vehicle industry, because it is possible to realize further improvement of the protection of the additive tank from splashing stones during operation of the vehicle or damage in the event of collision.

## Claims

1. A structure for arranging an additive tank for a vehicle, the vehicle comprising: a particulate filter (25) for trapping particulate matter in an exhaust gas which is exhausted from a diesel engine; and an additive tank (15) for containing an additive which lowers a combustion temperature of the particulate matter which is trapped by the particulate filter,
the structure **characterized in that**
the additive tank (15) is arranged between a floor panel (22) which is fixed to right and left side members (21a, 21b), and a cross member (11) which is provided so as to bridge the right and left side members.

2. The structure according to claim 1, **characterized in that**
the cross member (11) has a grid-like shape including a front traverse part (11a) extending in a lateral direction of the vehicle, a rear traverse part (11b) extending in the lateral direction and arranged at a rearward side of the vehicle than the front traverse part (11a) and at a lower side than the front traverse part (11a), and right and left connecting parts (11c, 11d) extending in a longitudinal direction of the vehicle and connected to the front traverse part and the rear traverse part.

3. The structure according to claim 1 or claim 2, **characterized in that**
the additive tank (15) is arranged at a substantially center in the lateral direction of the vehicle.

4. The structure according to any one of claims 1 to 3, **characterized in that**
the additive tank (15) is fixed to a lower face of the floor panel (22), and is arranged above the cross member (11) with respect to a road surface.

5. The structure according to claim 1, **characterized in that**
the additive tank (15) is arranged below the floor panel (22) and above the cross member (11).

## Patentansprüche

1. Struktur zum Anordnen eines Additivbehälters für ein Fahrzeug, wobei das Fahrzeug aufweist: einen Partikelfilter (25) zum Einfangen von partikelförmigem Material in einem von einem Dieselmotor ausgestoßenem Abgas; und einen Additivbehälter (15) zum Aufnehmen eines Additivs, das eine Verbrennungstemperatur des durch den Partikelfilter eingefangenen partikelförmigen Materials absenkt,
wobei die Struktur **dadurch gekennzeichnet ist, dass**
der Additivbehälter (15) zwischen einer an einem rechten und einem linken Seitenbauteil (21a, 21b) befestigten Bodenplatte (22) und einem Querträger (11) angeordnet ist, der derart angeordnet ist, dass er das rechte und das linke Seitenbauteil überbrückt.

2. Struktur nach Anspruch 1, **dadurch gekennzeichnet, dass**
der Querträger (11) eine gitterähnliche Form mit einem sich in einer Querrichtung des Fahrzeugs erstreckenden vorderen Querteil (11a), einem sich in die Querrichtung des Fahrzeugs erstreckenden hinteren Querteil (11b), das bezüglich des Fahrzeugs hinter dem vorderen Querteil (11a) und tiefer angeordnet ist als das vordere Querteil (11a), und mit einem rechten und einem linken Verbindungsteil (11c, 11d) hat, die sich in einer Längsrichtung des Fahrzeugs erstrecken und mit dem vorderen Querteil und dem hinteren Querteil verbunden sind.

3. Struktur nach Anspruch 1 oder 2, **dadurch gekennzeichnet, dass**
der Additivbehälter (15) in der Querrichtung des Fahrzeugs im Wesentlichen in der Mitte angeordnet ist.

4. Struktur nach einem der Ansprüche 1 bis 3, **dadurch gekennzeichnet, dass**
der Additivbehälter (15) an einer Unterseite der Bodenplatte (22) befestigt und bezüglich einer Straßenoberfläche über dem Querträger (11) angeordnet ist.

5. Struktur nach Anspruch 1, **dadurch gekennzeichnet, dass**
der Additivbehälter (15) unter der Bodenplatte (22) und über dem Querträger (11) angeordnet ist.

## Revendications

1. Structure pour installer un réservoir d'additif pour un véhicule, le véhicule comprenant: un filtre à particules (25) pour piéger toute matière particulaire dans un gaz d'échappement qui est dégagé par un moteur diesel; et un réservoir d'additif (15) pour contenir un additif qui abaisse une température de combustion de la matière particulaire qui est piégée par le filtre à particules,
la structure étant **caractérisée en ce que** le réservoir d'additif (15) est installé entre un panneau de plancher (22) qui est fixé aux éléments latéraux droit et gauche (21a, 21b), et un élément transversal (11) qui est prévu de manière à relier les éléments latéraux droit et gauche.

2. Structure selon la revendication 1, **caractérisée en ce que** l'élément transversal (11) présente une forme de type grille comprenant une partie transversale avant (11a) qui s'étend dans une direction latérale du véhicule, une partie transversale arrière (11b) qui s'étend dans la direction latérale et qui est installée à un côté plus en arrière du véhicule que la partie transversale avant (11a), et à un côté plus bas que la partie transversale avant (11a), et des parties de connexion droite et gauche (11c, 11d) qui s'étendent dans une direction longitudinale du véhicule et qui sont connectées à la partie transversale avant et à la partie transversale arrière.

3. Structure selon la revendication 1 ou la revendication 2, **caractérisée en ce que** le réservoir d'additif (15) est installé sensiblement au centre dans la direction latérale du véhicule.

4. Structure selon l'une quelconque des revendications 1 à 3, **caractérisée en ce que** le réservoir d'additif (15) est fixé à une face inférieure du panneau de plancher (22) et est installé au-dessus de l'élément transversal (11) par rapport à une surface de route.

5. Structure selon la revendication 1, **caractérisée en ce que** le réservoir d'additif (15) est installé en dessous du panneau de plancher (22) et au-dessus de l'élément transversal (11).
